Europäisches Patentamt

European Patent Office

Office européen des brevets

(19)

(11) Veröffentlichungsnummer : **0 374 555 B1**

# (12) EUROPÄISCHE PATENTSCHRIFT

(45) Veröffentlichungstag der Patentschrift :
02.09.92 Patentblatt 92/36

(51) Int. Cl.⁵ : **B09B 1/00**

(21) Anmeldenummer : 89122271.3

(22) Anmeldetag : 02.12.89

(54) Verfahren zur Oberflächenabdichtung von Deponien.

(30) Priorität : 15.12.88 DE 3842213

(43) Veröffentlichungstag der Anmeldung :
27.06.90 Patentblatt 90/26

(45) Bekanntmachung des Hinweises auf die
Patenterteilung :
02.09.92 Patentblatt 92/36

(84) Benannte Vertragsstaaten :
AT BE CH DE ES FR GB IT LI NL SE

(56) Entgegenhaltungen :
EP-A- 0 226 880
DE-A- 2 224 363
US-A- 3 466 873
US-A- 3 586 624
US-A- 4 483 641

(73) Patentinhaber : BAYER AG
W-5090 Leverkusen 1 Bayerwerk (DE)

(72) Erfinder : Bahnmüller, Heinz, Dr.
Ammerweg 19
W-5067 Kürten 2 (DE)
Erfinder : Fricke, Hans-Otto, Dipl.-Ing.
Elsternweg 19
W-5204 Lohmar 1 (DE)
Erfinder : Koglin, Bernd, Prof. Dr.
Zehntweg 27
W-5060 Bergisch Gladbach 2 (DE)
Erfinder : Rink, Rolf
Andreas-Gryphius-Strasse 6
W-5000 Köln 80 (DE)
Erfinder : Vogel, Wolfgang, Dipl.-Ing.
Gartenstrasse 68
W-5200 Siegburg (DE)

**Beschreibung**

Die Erfindung betrifft ein Verfahren zur Oberflächenabdichtung einer Abfalldeponie, die mit mindestens einer Abfallschicht einer niedrigeren Deponieklasse mit entsprechend niedrigerem Gefährdungspotential abgedeckt ist.

Der Oberflächenabdichtung von Abfalldeponien kommt im Rahmen des Umweltschutzes eine hohe Bedeutung zu. Maßgebend sind dabei die langzeitigen physikalischen und chemischen Wechselwirkungen der Deponie mit dem Gelände, in dem die Deponie errichtet wurde. hinsichtlich der Gefährdung der Umwelt (Gefährdungspotential) wurden 5 verschiedene Deponieklassen in der Reihenfolge

Deponieklasse 5 =     Sonderabfälle
Deponieklasse 4 =     Gewerbe- und Industrieabfälle
Deponieklasse 3 =     Siedlungsabfälle
Deponieklasse 2 =     Bauschutt
Deponieklasse 1 =     Bodenaushub

definiert. In dieser Reihenfolge nimmt das Gefährdungspotential von oben nach unten ab; d.h. den Sonderabfällen wird das höchste und dem Bodenaushub das niedrigste Gefährdungspotential zugeschrieben.

In US-A1-44 83 641 wird eine Deponie beschrieben, die mit einer porösen Belüftungsschicht und einer darüber befindlichen mineralischen Oberflächendichtung abgedeckt ist. Die poröse Belüftungsschicht hat die Aufgabe, durch Oberflächeninfiltration einsickerndes oder aufgrund der Kapillarkräfte aus der Deponie aufsteigendes Wasser vorübergehend zu binden und anschließend wieder zu verdampfen. Aus diesem Grund wird für die Belüftungsschicht ein relativ grobkörniges Material, z.B. Steine oder zerkleinerter Beton mit relativ groben Bestandteilen, gewählt. Diese poröse Schicht ist mit Absaugrohren versehen, wobei der für die Absaugung erforderliche Unterdruck durch natürliche Windströmungen erzeugt werden soll.

Um das Abwandern und Auswaschen von Schadstoffen aus Deponien zu minimieren, wurden in neuerer Zeit eine Reihe von Vorschriften zur Oberflächenabdichtung von Deponien definiert. So werden z.B. für die Oberflächenabdichtung einer Sonderabfalldeponie (Deponieklasse 5) folgende Abdeckschichten von innen nach außen vorgeschrieben:

– Über dem Sonderabfall eine mindestens 0,5 m dicke Ausgleichsschicht aus homogenem, nichtbindigem Material;

– darüber bei möglicher Gasbildung eine mindestens 0,3 m dicke flächenhafte, filterstabile Dränschicht zur Gasdränage;

– darüber eine mindestens 0,5 m dicke mineralische Dichtung mit einem Durchlässigkeitswert k $\leqq 5 \times 10^{-10}$ m/s;

– darauf aufliegend (als Kombinationsdichtung mit mineralischer Dichtung) eine HDPE-Kunststoffbahn mit mindestens 2 mm Dicke;

– darüber eine 0,3 m dicke mineralische Dränschicht;

– und als oberste Schicht eine 1,0 m bis 1,5 m dicke Schutz- und Vegetationsschicht als kulturfähiger und bepflanzbarer Boden.

Für Deponien von Siedlungsabfällen (Deponieklasse 3) wird eine Oberflächenabdichtung mit der nachfolgend angegebenen Schichtfolge zugrundegelegt:

– Über dem Abfall der Deponieklasse 3 eine Ausgleichsschicht

– darauf eine mindestens 0,2 m dicke, gegebenenfalls mit Geotextil versehene Gasdränage;

– darüber eine 0,5 m dicke mineralische Dichtung mit einem Durchlässigkeitswert von k $\leqq 5 \times 10^{-10}$ m/s;

– darauf gegebenenfalls eine Kunststoffdichtungsbahn;

– darüber eine mindestens 0,2 m dicke Dränschicht;

– als Abschluß wiederum eine Schutz- und Rekultivierungsschicht.

Gemäß einer Richtlinie für Bauschuttdeponien werden folgende Anforderungen an die Oberflächenabdichtung für Deponien von Bauschutt und bauschuttähnlichen Abfällen (Deponieklasse 2) gestellt:

Die Mächtigkeit der Oberflächenabdichtung soll 50 cm, die der Entwässerungsschicht (Dränschicht) 30 cm nicht unterschreiten. Der Durchlassigkeitswert der Abdichtungsschicht muß k $\leqq 1 \times 10^{-8}$ m/s, der der Entwässerungsschicht k $\geqq 1 \times 10^{-4}$ m/s sein.

Für Bodenaushubdeponien (Deponieklasse 1) Verden in demselben Richtlinienentwurf keine Oberflächenabdichtungen gefordert.

Die Oberflächenabdichtungssysteme für die Deponieklassen 3 bis 5 nach dem heutigen Stand der Technik, die eine Kombinationsdichtung aus mineralischer Dichtung mit direkt aufliegender Kunststoffbahn beinhalten, haben folgende Nachteile:

– Die Kunststoffdichtungsbahn ist nur begrenzt alterungsbeständig, nur begrenzt mikroorganismenbeständig und nur begrenzt stabil gegen Durchwurzelung und Nagetierbefall;

2

– insbesondere in den Böschungsbereichen bestehen noch ungeklärte Probleme bezüglich der Gleitgefahr der Bodenschichten auf der Kunststoffdichtungsbahn;

– wegen der geringen Durchwurzelungstiefe (<2 m) ist keine beliebige Bepflanzung möglich. Unkontrollierter Bewuchs auch mit Tiefwurzlern (z.B Bäume) durch natürliche Besamung muß verhindert werden;

– gegen Windbruch besteht insbesondere bei nicht bestimmungsgemäßem Bewuchs keine hohe Stabilität.

Es läßt sich unter diesen Umständen absehen, daß die Langzeit- und Erosionsbeständigkeit der bekannten Oberflächenabdichtungssysteme in Frage gestellt ist.

Hier setzt die Erfindung an. Es liegt die Aufgabe zugrunde, Abfalldeponien mit höherem Gefährdungspotential (höhere Deponieklassen) besser und auf lange Zeit sicherer einzuschließen und von der Umwelt fernzuhalten. Die dazu erforderlichen Maßnahmen müssen in einem wirtschaftlich vertretbaren Rahmen bleiben; d.h. eventuelle Kostensteigerungen bei der Anlage von Deponien müssen gering und zumutbar bleiben.

Diese Aufgabe wird erfindungsgemäß dadurch gelöst, daß eine innere (untere) Deponie für Siedlungsabfälle der Klasse 3 oder Industrieabfälle der Klasse 4 oder Sonderabfälle der Klasse 5 mit einer mineralischen Dichtung versehen wird und mit einer 1 m bis 30 m dicken äußeren (oberen) Deponieschicht aus dränagefähigem Bauschutt, bauschuttähnlichen Mineralstoffen und/oder Bodenaushub der Klassen 2 und 1, einschließlich einer aus mineralischer Dichtung, Dränageschicht und kulturfähigem Boden bestehenden Oberflächenabdichtung eingekapselt wird.

Bei diesem Verfahren werden also mehrere Abfallschichten mit nach außen hin abnehmender Deponieklasse sukzessive übereinander abgelagert, so daß jede Abfallschicht von einer darüberliegenden Abfallschicht einer niedrigeren Deponieklasse umschlossen wird.

Eine nach dieser Methode abgedichtete Deponie höheren Gefährdungspotentials (höhere Deponieklasse) wird somit von einer oder mehreren mächtigen Schichten von Abfällen niedrigeren Gefährdungspotentials (niedrigere Deponieklassen) mit den zugehörigen Oberflächenabdichtungssystemen eingekapselt und geschützt. Die Dicke der äußeren Deponieschicht soll dabei bevorzugt 3 bis 10 m betragen. Auf diese Weise werden die Abfälle mit einem höheren Gefährdungspotential mit hoher Sicherheit von der Umwelt abgeschlossen. Auf der anderen Seite müssen Abfälle mit einem geringeren Gefährdungspotential nicht mehr gesondert auf einer speziell hierfür einzurichtenden Deponie entsorgt werden, da sie zur Abdichtung einer Deponie höherer Klasse ausgenutzt werden. Somit wurde eine völlig neue Möglichkeit erschlossen, das grundsätzliche Verwertungsgebot für Abfälle niedrigerer Deponieklassen zu erfüllen.

Eine vorteilhafte Variante dieses Verfahrens besteht darin, daß eine Sonderabfalldeponie der Klasse 5 vor der Einkapselung mit der äußeren Deponieschicht mit einer mineralischen Dichtung versehen wird und anschließend mit einer Zwischenschicht aus Industrieabfällen der Klasse 4 überschichtet wird, die wiederum mit einer mineralischen Dichtung abgedeckt wird.

Eine weitere Variante ist dadurch gekennzeichnet, daß eine Sonderabfalldeponie der Klasse 5 oder Industrieabfälle der Klasse 4 vor der Einkapselung mit der äußeren Deponieschicht mit einer mineralischen Dichtung versehen wird und anschließend mit einer Zwischenschicht aus Siedlungsabfällen der Klasse 3 überschichtet wird, die ihrerseits mit der mineralischen Dichtung abgedeckt wird.

Eine Weiterentwicklung des erfindungsgemäßen Verfahrens besteht darin, daß das durch die dränagefähige Schicht von Bauschutt, bauschuttähnlichen Mineralstoffen und/oder Bodenaushub eindringende Oberflächenwasser in einem gesonderten Kanalsystem erfaßt, auf Schadstoffe analysiert und je nach Analysenergebnis entweder dem Sickerwasserkanal zu einer weiteren Abwasserbehandlung oder dem Regenwasserkanal zugeführt wird.

Für den unteren mindestens 0,3 m dicken, als Dränage dienenden Teil der Deponie werden vorzugsweise Bauschutt, bauschuttähnliche Mineralstoffe und/oder Bodenaushub verwendet die zu mindestens 95 % aus den Kornfraktionen Sand, Kies und Steine bestehen.

Das erfindungsgemäße Verfahren kann hinsichtlich des Aufbaus der äußeren Schicht auch in der Weise durchgeführt werden, daß über einer mindestens 0,3 m dicken, dränagefähigen Schüttschicht Platten oder Blöcke aus mit hohem Druck gepreßtem Bauschutt oder bauschuttähnlichen Mineralstoffen und/oder Bodenaushub dachziegel- oder mauerartig verlegt sind.

Mit der Erfindung werden folgende Vorteile erzielt:

– Die mehrere Meter mächtige obere Deponieschicht aus Bauschutt, bauschuttähnlichen Mineralstoffen oder Bodenaushub bildet eine zuverlässig bleibende Nagetiersperre und Wurzelsperre.

– Die obere Deponieschicht gewährleistet eine hohe Erosionsstabilität.

– Die obere Deponieschicht schützt darunterliegende mineralische Dichtungen langfristig.

– Die obere Deponieschicht kann als eine Dränageschicht großer Mächtigkeit dienen.

– Die obere Deponieschicht ermöglicht eine beliebige Bepflanzung. Selbst Tiefwurzler (Bäume) und ein unkontrollierter Bewuchs durch natürliche Besamung sind zulässig.

– Auch bei beliebigem Bewuchs besteht eine hohe Stabilität gegen Windbruch.

– Der Deponieaufbau ermöglicht standsichere Böschungen (hohe Böschungsstabilität).

– Das gesamte Oberflächenabdichtungssystem ist mikroorganismenbeständig.

Im folgenden werden Ausführungsbeispiele der Erfindung anhand von Zeichnungen näher erläutert. Es zeigen:

Fig. 1 einen Querschnitt durch eine vierschichtige, nach dem erfindungsgemäßen Verfahren abgelagerte Deponie,

Fig. 2 einen Querschnitt durch eine mit einer mineralischen Abdichtung versehene und mit einer Bauschuttdeponie mit zugehörigem Abdichtungssystem eingekapselte Sonderabfalldeponie.

Fig. 3 das Oberflächenentwässerungssystem derselben Deponie

Fig. 4 eine entsprechende mehrschichtige Deponie, bei der die äußere Bauschuttdeponie zum Teil aus Platten oder Blöcken von gepreßtem, mineralischem, bauschuttähnlichem Material und/oder Bodenaushub besteht.

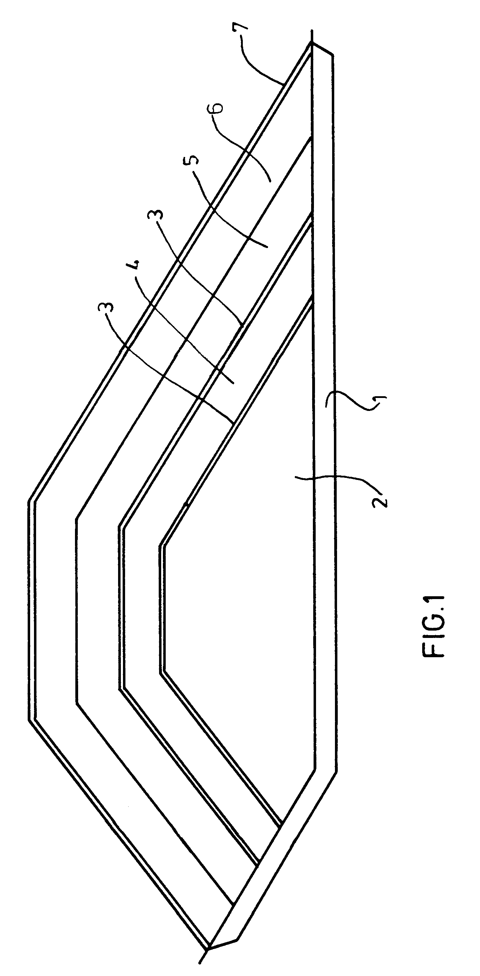

Gemäß Fig. 1 wird zunächst auf einem Basisabdichtungssystem 1 eine Deponie 2, beispielsweise eine Sonderabfalldeponie der Klasse 5 angelegt und mit einem Oberflächenabdichtungssystem 3, beispielsweise einer mineralischen Dichtung mit Dränage, abgedeckt. Darauf wird anschließend eine Abfallschicht 4 mit einer niedrigeren Deponieklasse, z.B. Klasse 4, aufgebracht. Die Abfallschicht 4 wird wiederum mit einer Oberflächendichtung 3 versehen. Darüber werden dann weitere Abfallschichten und 6 mit nach außen hin abnehmenden Deponieklassen, z.B. Bauschutt (Deponieklasse 2) und darüber Bodenaushub (Deponieklasse 1) abgelagert. Die äußerste Schicht 6 wird schließlich mit einem für Außenabdichtungen geeigneten Oberflächenabdichtungssystem 7 abgedeckt. Die Basisabdichtung kann aus einer Kombination von Kunststoffabdichtungsbahnen mit mineralischen Dichtungsschichten bestehen. Als mineralische Dichtung dient üblicherweise ein feinkörniges Tonmineral. Die Kornabstufung des mineralischen Materials muß ein Austragen von Feinstbestandteilen verhindern.

Die einfachste Variante des erfindungsgemäßen Verfahrens besteht darin, daß eine Deponie der Klasse 5 (Sonderabfälle), der Klasse 4 (Gewerbe- und Industrieabfälle) oder der Klasse 3 (Siedlungsabfälle) mit einer mineralischen Dichtung versehen wird und anschließend mit einer Schicht von mehreren Metern Bauschutt (bevorzugt Grobanteil von aufbereitetem Bauschutt) abgedeckt (eingekapselt) wird, auf die wiederum eine für Bauschuttdeponien geeignete Oberflächenabdichtung aufgebracht wird. Zusätzlich kann die so entstandene Deponieoberfläche zwischen der mineralischen Dichtung für die Bauschuttdeponie und der Schicht kulturfähigen Bodens noch mit Bodenaushub (Deponieklasse 1) angereichert werden.

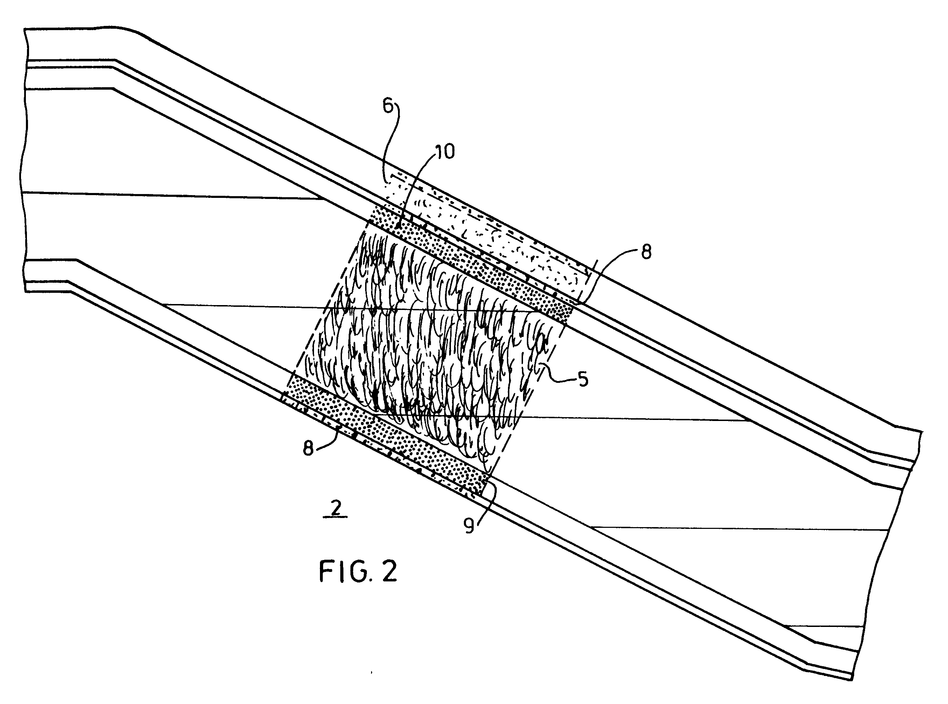

Nach dem Ausführungsbeispiel gemäß Fig. 2 wird eine Sonderabfalldeponie 2 mit einer Entwässerungs- und/oder Gasdränageschicht 8 abgedeckt und zusätzlich mit einer mineralischen Dichtungsschicht 9 einer Durchlässigkeit von $K_f \leqq 5 \times 10^{10}$ m/s versehen. Darauf wird dann eine mehrere Meter dicke Bauschuttschicht 5 deponiert, die zugleich als Wurzelsperre dient. Auf die Bauschuttschicht 5 folgt anschließend eine mineralische Dichtungsschicht 10 mit einer Durchlässigkeit $K_f \leqq 10^{-8}$ m/s und darauf eine Dränageschicht 8. Als oberste Schicht wird schließlich ein durchwurzelungsfähiger Boden 6 auf die Mehrschichtdeponie aufgebracht.

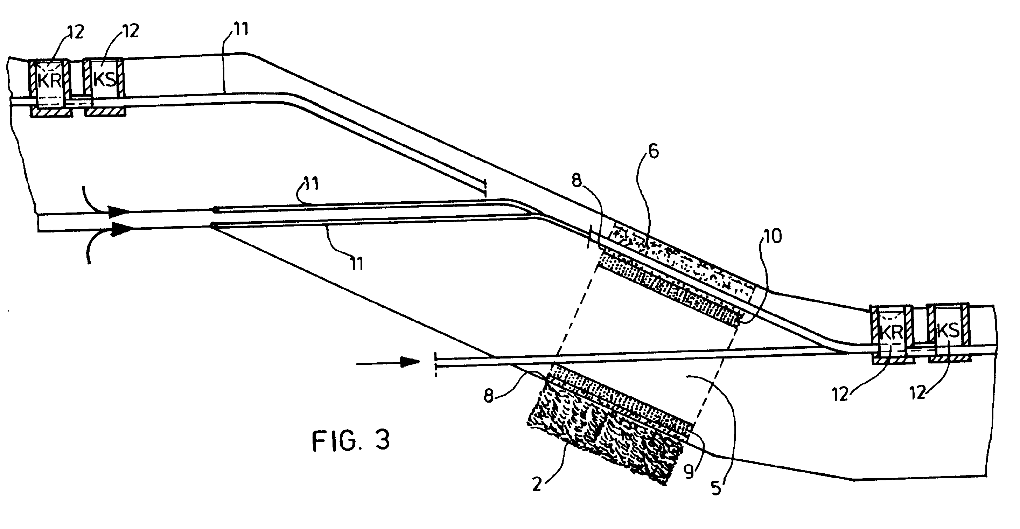

Die beschriebenen Mehrschichtdeponien gemäß Fig. 1 und 2 können gemäß Fig. 3 mit einem Kanalsystem zur Ableitung und Kontrolle von einsickerndem Oberflächenwasser versehen werden. Zu diesem Zweck werden Dränageleitungen 11 mit Anschlüssen in die einzelnen Deponieschichten gelegt, die zu Kontrollschächten 12 herausgeführt sind. Abhängig von dem Analysenergebnis wird dann das Sickerwasser entweder einem Sickerwasserkanalsystem oder einem Regenwasserkanalsystem zugeführt.

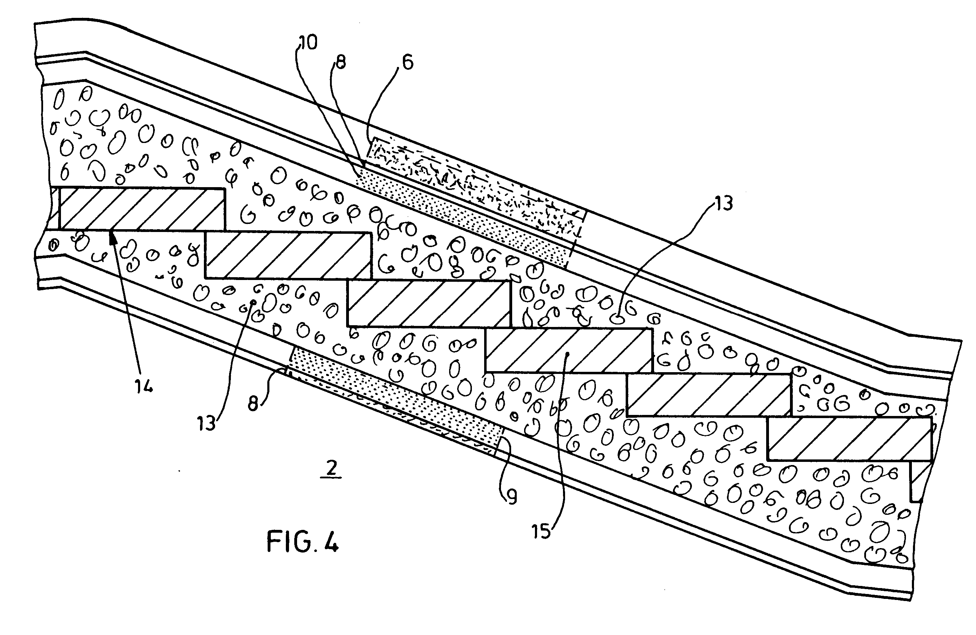

Eine weitere bewährte Ausführungsform des neuen Deponieverfahrens besteht darin, daß die äußere Bauschutt- und Bodenaushubdeponie 5, 6 gemäß Fig. 4 aus drei Schichten aufgebaut wird. Dabei besteht die untere Schicht 13 aus dränagefähigem Bauschutt mit einer Mächtigkeit von mindestens 0,3 m. Die hierauf aufliegende zweite, mindestens 2 m mächtige Schicht 14 besteht aus Platten oder Blöcken 15 von mit hohem Druck gepreßtem, mineralischem, bauschuttähnlichem Material und/oder Bodenaushub, die dachziegelartig überlappend (wie in Fig. 4) oder wie Bausteine in einer Schichtstärke von mindestens 0,2 m auf die Schüttung 13 von dränagefähigem Bauschutt aufgesetzt sind. Die gepreßte Blockschicht 14 weist eine besonders hohe mechanische Festigkeit auf. Als dritte Schicht wird auf der Blockschicht 14 wiederum eine Schicht 13 aus dränagefähigem Bauschutt abgelagert. Diese Schicht wird schließlich mit dem für Bauschuttdeponien vorgeschriebenen, anhand von Fig. 3 erläuterten Oberflächenabdichtungssystem der Schichtfolgen 6, 8, 10 versehen.

**Patentansprüche**

1.  Verfahren zur Oberflächenabdichtung einer Abfalldeponie, die mit mindestens einer Abfallschicht einer niedrigeren Deponieklasse mit entsprechend niedrigerem Gefährdungspotential abgedeckt wird, dadurch gekennzeichnet, daß eine Deponie für Siedlungsabfälle der Klasse 3 oder Industrieabfälle der Klasse 4 oder Sonderabfälle der Klasse 5 (2) mit einer mineralischen Dichtung (3) versehen wird und mit einer 1 m bis 30 m, dicken äußeren (oberen) Deponieschicht (6) aus dränagefähigem Bauschutt, bauschuttähnlichen Mineralstoffen und/oder Bodenaushub der Klassen 2 und 1, einschließlich einer aus mineralischer Dichtung, Dränageschicht und kulturfähigem Boden bestehenden Oberflächenabdichtung (7) eingekapselt wird.

2. Verfahren nach Anspruch 1, dadurch gekennzeichnet, daß die mit der mineralischen Dichtung (3) versehene innere Deponieschicht (2) mit einer 3 m bis 10 m dicken äußeren Deponieschicht (6) abgedeckt wird.

3. Verfahren nach Anspruch 1 bis 2, dadurch gekennzeichnet, daß eine Sonderabfalldeponie der Klasse 5 (2) vor der Einkapselung mit der äußeren Deponieschicht mit einer mineralischen Dichtung (3) versehen wird und anschließend mit einer Zwischenschicht aus Industrieabfällen der Klasse 4 (4) überschichtet wird, die wiederum mit einer mineralischen Dichtung abgedeckt (3) wird.

4. Verfahren nach Anspruch 1 bis 2, dadurch gekennzeichnet, daß eine Sonderabfalldeponie der Klasse 5 (2) oder Industrieabfälle der Klasse 4 (4) vor der Einkapselung mit der äußeren Deponieschicht mit einer mineralischen Dichtung (3) versehen wird und anschließend mit einer Zwischenschicht aus Siedlungsabfällen der Klasse 3 überschichtet wird, die wiederum mit einer mineralischen Dichtung (3) abgedeckt wird.

5. Verfahren nach Ansprüchen 1 bis 4, dadurch gekennzeichnet, daß das durch die dränagefähige Schicht (6) von Bauschutt, bauschuttähnlichen Mineralstoffen und/oder Bodenaushub hindurchdringende Oberflächenwasser in einem gesonderten Kanalsystem (11, 12) gefaßt wird, auf Schadstoffe analysiert wird und je nach Analysenergebnis entweder dem Sickerwasserkanal zur Abwasserbehandlung oder dem Regenwasserkanal zugeführt wird.

6. Verfahren nach Ansprüchen 1 bis 5, dadurch gekennzeichnet, daß der untere Teil von mindestens 0,3 m Dicke der Schicht (6) von Bauschutt, bauschuttähnlichen Mineralstoffen und/oder Bodenaushub zu mindestens 95 % aus den Kornfraktionen Sand, Kies und Steine besteht und als Dränage dient.

7. Verfahren nach Ansprüchen 1 bis 6, dadurch gekennzeichnet, daß in der äußeren Deponieschicht über einer mindestens 0,3 m dicken, dränagefähigen Schüttschicht Platten oder Blöcke (15) aus mit hohem Druck gepreßtem Bauschutt, bauschuttähnlichen Mineralstoffen und/oder Bodenaushub dachziegelartig oder wie Bausteine verlegt sind.

## Claims

1. A method of sealing the surface of a waste dump which is covered with at least one waste layer assigned to a lower dump category with a correspondingly lower hazard potential, characterised in that a dump for urban waste assigned to category 3 or for industrial waste assigned to category 4 or for special waste assigned to category 5 (2) is provided with a mineral seal (3) and is encapsulated with a 1 m to 30 m thick, outer (upper) dump layer (6) of drainable building waste, mineral materials similar to building waste, and/or excavated soil of categories 2 and 1, including a surface seal 7 composed of a mineral seal, a drainage layer and cultivatable soil.

2. A method as claimed in Claim 1, characterised in that the inner dump layer (2) provided with the mineral seal (3) is covered with a 3 m to 10 m thick, outer dump layer (6).

3. A method as claimed in Claims 1 to 2, characterised in that, prior to encapsulation with the outer dump layer, a special waste dump assigned to category 5 (2) is provided with a mineral seal (3) and is then covered with an intermediate layer of industrial waste assigned to category 4 (4), which in turn is covered with a mineral seal (3).

4. A method as claimed in Claims 1 to 2, characterised in that, prior to encapsulation with the outer dump layer, a dump for special waste assigned to category 5 (2) or for industrial waste assigned to category 4 (4) is provided with a mineral seal (3) and is then covered with an intermediate layer of urban waste assigned to category 3, which in turn is covered with a mineral seal (3).

5. A method as claimed in Claims 1 to 4, characterised in that the surface water, which penetrates through the drainable layer (6) of building waste, mineral materials similar to building waste and/or excavated soil, is collected in a special conduit system (11, 12), is analyzed in respect of noxious substances and, depending upon the result of the analysis, is conveyed either to the percolating water conduit for waste water treatment or to the rainwater conduit.

6. A method as claimed in Claims 1 to 5, characterised in that at least 95% of the lower part, which has a thickness of at least 0.3 m, of the layer (6) of building waste, mineral materials similar to building waste and/or excavated soil consists of the granular fractions sand, pebbles and stones, and the said lower part of the layer (6) serves as drainage system.

7. A method as claimed in Claims 1 to 6, characterised in that in the outer dump layer, plates or blocks (15) composed of building waste, mineral materials similar to building waste and/or excavated soil, compressed at high pressure, are arranged in the manner of roof tiles or building blocks above a drainable layer of waste with a minimum thickness of 0.3 m.

**Revendications**

1. Procédé pour l'étanchéification superficielle d'une décharge de déchets, qui est recouverte à l'aide d'au moins une couche de déchets d'une classe de décharge inférieure et présentant un potentiel de danger inférieur correspondant, **caractérisé en ce qu'**on munit d'une couche minérale d'étanchéité (3) une décharge destinée à des déchets d'agglomération de la classe 3 ou à des déchets industriels de la classe 4 ou encore à des déchets spécifiques de la classe 5 (2), et on l'enrobe d'une couche de décharge externe (supérieure) (6) ayant une épaisseur de 1 m à 30 m, comprenant des décombres, des matières minérales analogues à des décombres et/ou des déblais de terre des classes 2 et 1 aptes au drainage, y compris une étanchéification superficielle (7) constituée par une couche minérale d'étanchéité, une couche de drainage et un sol apte à la culture.

2. Procédé selon la revendication 1, **caractérisé en ce qu'**on recouvre la couche de décharge interne (2) munie de la couche minérale d'étanchéité (3) d'une couche externe (6) ayant une épaisseur de 3 m à 10 m.

3. Procédé selon les revendications 1 et 2, **caractérisé en ce qu'**on munit une décharge de déchets spécifiques de la classe 5 (2) avant de procéder à l'enrobage à l'aide de la couche externe de décharge, d'une couche minérale d'étanchéité (3) et ensuite on la recouvre d'une couche intermédiaire constituée par des déchets industriels de la classe 4 (4), qui est à son tour recouverte d'une couche minérale d'étanchéité (3).

4. Procédé selon les revendications 1 et 2, **caractérisé en ce qu'**on munit une couche de déchets spécifiques de la classe 5 (2) ou de déchets industriels de la classe 4 (4) avant de procéder à l'enrobage à l'aide de la couche externe de décharge, d'une couche minérale d'étanchéité (3), et ensuite on la recouvre d'une couche intermédiaire constituée par des déchets d'agglomération de la classe 3, qui est à son tour recouverte d'une couche minérale d'étanchéité (3).

5. Procédé selon les revendications 1 à 4, **caractérisé en ce qu'**on récolte dans un système de canalisation séparé (11, 12) l'eau superficielle qui pénètre à travers là couche (6) pouvant faire office de drain constituée par des décombres, des substances minérales analogues à des décombres et/ou des déblais de terre, on l'analyse quant à sa teneur en substances nocives et, selon le résultat de l'analyse, on l'achemine, soit à la canalisation réservée aux eaux d'infiltration pour leur faire subir un traitement destiné aux eaux usées, soit à la canalisation réservée à l'eau de pluie.

6. Procédé selon les revendications 1 à 5, **caractérisé en ce que** la partie inférieure ayant au moins une épaisseur de 0,3 m, de la couche (6) constituée par des décombres, des substances minérales analogues à des décombres et/ou des déblais de terre, est constituée à concurrence d'au moins 95 % des fractions granulométriques, de sable, de gravier et de pierres et fait office de drain.

7. Procédé selon les revendications 1 à 6, **caractérisé en ce que**, dans la couche externe de décharge, on dépose, à la manière dont on pose des tuiles ou des briques, par dessus une couche de décombres pou-

6

vant faire office de drain ayant une épaisseur minimale de 0,3 m, des plaques ou des blocs (15) constitués par des décombres, des substances minérales analogues à des décombres et/ou des déblais de terre comprimés sous haute pression.

FIG.1

FIG. 2

EP 0 374 555 B1

FIG. 3

FIG. 4